# EUROPÄISCHE PATENTSCHRIFT

(11) **EP 4 264 188 B1**
(45) Veröffentlichungstag und Bekanntmachung des Hinweises auf die Patenterteilung: **05.11.2025**
(21) Anmeldenummer: 21840772.4
(22) Anmeldetag: 14.12.2021
(51) Int. Cl.: G01D 5/14, H01F 1/00, H01F 7/00

(54) **MAGNETISCHE SIGNALEINRICHTUNG ZUR MESSUNG DER BEWEGUNG UND/ODER DER POSITION EINES BAUTEILES EINER ANTRIEBSMASCHINE**
MAGNETIC SIGNAL DEVICE FOR MEASURING THE MOVEMENT AND/OR THE POSITION OF A COMPONENT OF A DRIVE MACHINE
DISPOSITIF À SIGNAUX MAGNÉTIQUES DE MESURE DU MOUVEMENT ET/OU DE LA POSITION D'UN ÉLÉMENT D'UNE MACHINE D'ENTRAÎNEMENT

(30) Priorität: 15.12.2020 AT 510882020
(43) Veröffentlichungstag der Anmeldung: 25.10.2023
(73) Patentinhaber: Miba eMobility GmbH, 4663 Laakirchen (AT)
(72) Erfinder: PESSENHOFER, Werner, 8076 Vasoldsberg (AT)
(74) Vertreter: Burger, Hannes
(86) Internationale Anmeldenummer: PCT/AT2021/060468
(87) Internationale Veröffentlichungsnummer: WO 2022/126159

(56) Entgegenhaltungen:
- EP-A2- 0 151 861
- WO-A2-2010/006573
- DE-A1- 10 038 296
- DE-A1- 102008 051 242
- DE-A1- 102016 118 376
- DE-B3- 102004 063 462
- JP-A- S60 195 416
- US-A1- 2009 058 403
- US-A1- 2019 172 008
- RALF BANDORF: "High Rate Deposition of Magnetic Material by Gas Flow Sputtering", PLASMA PROCESSES AND POLYMERS, vol. 4, no. S1, 1 April 2007 (2007-04-01), DE, pages S129 - S133, XP093159360, ISSN: 1612-8850, DOI: 10.1002/ppap.200730504
- BANDORF R ET AL: "Gas flow sputtering for manufacture of high quality hard magnetic films", SURFACE AND COATINGS TECHNOLOGY, vol. 314, 2017, pages 92 - 96, XP029939488, ISSN: 0257-8972, DOI: 10.1016/J.SURFCOAT.2016.12.114
- FRAUNHOFER IST: "Jahresbericht 2015", FRAUNHOFER IST JAHRESBERICHT, 2016, Braunschweig, pages 1 - 122, XP093159369
- RALF BANDORF: "PVD-Abscheidung von CoSm-Schichten f�r magnetische Ma�st�be : Hohlkathoden-Gasfluss-Sputtern (GFS) f�r hochwertige Hartmagnetschichten", VAKUUM IN FORSCHUNG UND PRAXIS, vol. 32, no. 5, 1 October 2020 (2020-10-01), DE, pages 28 - 32, XP093159376, ISSN: 0947-076X, Retrieved from the Internet <URL:https://onlinelibrary.wiley.com/doi/full-xml/10.1002/vipr.202000743> DOI: 10.1002/vipr.202000743

## Beschreibung

Die Erfindung betrifft eine magnetische Signaleinrichtung zur Messung der Bewegung und/oder der Position eines Bauteiles einer Antriebsmaschine.

Die Anforderungen, die an heutige absolute Positionssysteme bezüglich Messgenauigkeit, Baugröße und auch Kosten gestellt werden, unterscheiden sich oft deutlich, werden aber zunehmend höher.

Zur Erfassung von Winkeländerungen an rotierenden Wellen kommen meist Drehgeber zum Einsatz. Dabei unterscheidet man zwischen Inkrementalgebern zur Ermittlung von Drehzahl bzw. -richtung und Absolutwertgebern zur Bestimmung der absoluten Position. Dafür werden entweder optische Abtastverfahren oder Verfahren auf Magnetsensorbasis in Verbindung mit Polrädern eingesetzt.

Das am häufigsten genutzte Messprinzip für hochpräzise Anwendungen ist die optische bzw. photoelektrische Abtastung. Ein durch eine Lichtquelle, meist eine Infrarot-Leuchtdiode, erzeugter Lichtstrahl wird durch eine Optik, insbesondere einen Kondensor, eine Maßverkörperung, insbesondere ein Strichgitter, sowie eine Abtastplatte, insbesondere eine Blende, auf ein photo-optisches Bauelement, vorzugsweise eine Photodiode geleitet. Durch die Rotation der mit Schlitzen versehenen Scheibe wird der Lichtstrahl zwischen LED und Sensor periodisch moduliert, wodurch der Sensor die Geschwindigkeit und Position bestimmen kann.

Das optische Messprinzip ist jedoch grundsätzlich empfindlich gegenüber Umwelteinflüssen wie Schock- und Vibrationsbelastungen, Schmutz, Temperaturschwankungen und Feuchtigkeit. Zwar können diese Nachteile durch spezielle Gehäusekonstruktionen kompensiert werden, allerdings führen die nötigen Gehäusekonstruktionen bei optischen Drehgebern zu gewissen Einschränkungen bei den Anbaumöglichkeiten. Mit der Größe der Wellendurchmesser steigen die Kosten für das Gebergehäuse und die erforderlichen Kugellager überproportional an, so dass ab Wellendurchmessern von 200 Millimetern und mehr wirtschaftlich sinnvolle Lösungen kaum mehr möglich sind.

Als Alternative bieten sich Drehgeber mit magnetischem Messprinzip an. Durch ihre Unempfindlichkeit gegenüber Schock und Vibration sowie gegen Schmutz, Temperaturschwankungen und Feuchtigkeit können Magnetgeber vor allem dort eingesetzt werden, wo die Lebensdauer der optischen Drehgeber trotz aufwändiger Schutzgehäuse eingeschränkt ist. Das sind Einsatzgebiete, in denen die Drehgeber hohen Temperaturen, Temperaturschwankungen, Verschmutzung und Staubbelastung und/oder Belastungen/Kontaminationen mit Chemikalien und Lösemitteln ausgesetzt sind.

DE10038296A1 offenbart eine magnetische Signaleinrichtung zur Messung der Position eines rotierenden Bauteiles.

Die magnetische Teilung eines auf der drehenden Welle befestigten Polrads und/oder Encoders ist der Signalgeber für einen Sensor. Ein solcher Encoder ist beispielsweise aus der EP1030181A2 bekannt. Die Elektronik ist im Abtastkopf mit hoher Schutzart integriert und kann bei Bedarf komplett vergossen werden. Durch den zweiteiligen Systemaufbau mit Polrad und Abtastkopf können Magnetgeber ohne aufwändiges Schutzgehäuse und zusätzliche Kugellager eingesetzt werden - damit kann eine nahezu verschleißfreie Lösung mit sehr langer Lebensdauer realisiert werden. Ferner benötigen derartige Systeme kein freies Wellenende zur Installation und eignen sich daher gut für die Integration in Elektromotoren beispielsweise in Elektroautos. Die Veröffentlichung DE102016218930A1 zeigt ein weiteres solches Produkt. Alternativ zeigt beispielsweise die Veröffentlichung DE102018217274A1 die Herstellung eines Ringes aus gesinterten Teilmagneten jeweils verbunden mit polymerbasierten Zwischenstücken.

Die bisherigen Herstellmethoden für hartmagnetisch wirksame Schichten bestehen aus Polymer-Compositen und weisen Limitationen in der Anwendbarkeit auf. Insbesondere die limitierte Haltbarkeit und Beständigkeit gegenüber Fetten und Ölen sowie Kompromisse hinsichtlich der Genauigkeit solcher, im Stand der Technik bekannten, Schichten machen es im Stand der Technik unmöglich solche Schichten für Hochleistungsanwendungen einzusetzen.

Es ist deshalb eine Aufgabe der vorliegenden Erfindung eine magnetische Signaleinrichtung zu entwickeln, die diese Nachteile behebt und den Stand der Technik weiterentwickelt.

Diese technische Aufgabe wird durch einen magnetische Signaleinrichtung nach Anspruch 1 gelöst.

Nach einer besonderen Ausführungsform ist eine magnetische Signaleinrichtung zur Messung der Position eines rotierenden Bauteiles einer Antriebsmaschine vorgesehen, wobei die Signaleinrichtung mit dem Bauteil der Antriebsmaschine rotationsfest gekoppelt ist und die Signaleinrichtung ein Tragelement und eine, auf dem Tragelement aus einer Gasphase direkt auf dem Tragelement abgeschiedene, hartmagnetische Schicht aufweist, wobei die hartmagnetische Schicht zumindest zu 75 Gewichts%, vorzugsweise zumindest zu 85 Gewichts%, besonders bevorzugt zumindest zu 90 Gewicht%, bezogen auf die Zusammensetzung der hartmagnetischen Schicht, aus einer oder mehreren der folgenden Verbindungen besteht: NdFeB und/oder Co₅Sm und/oder Co₁₇Sm₂ und die hartmagnetische Schicht in ihrem Abtastbereich eine magnetische Remanenz von 0,3 T bis 1,3 T aufweist und die hartmagnetische Schicht in Rotationsrichtung eine magnetische Struktur aufweist, sodass, in Abhängigkeit des Drehwinkels des Bauteils, an der hartmagnetischen Schicht über einen Sensor die magnetische Struktur, beispielsweise die magnetische Feldstärke und/oder Orientierung in unterschiedlicher Höhe messbar ist um einen Rückschluss auf die Rotation und/oder Position des Bauteils zu ermöglichen.

Die erfindungsgemäßen Polräder eignen sich für einen Einsatz bei sehr hohen Drehzahlen, da die durch die aus der Gasphase abgeschiedene hartmetallische Schicht eine hohe Haftfestigkeit der Schicht am Trägerelement erzielt werden kann. Ferner ist die hartmagnetische, aus der Gasphase direkt auf das Trägerelement abgeschiedene, Schicht gegenüber Ölen und Fetten sehr beständig. Die aus dem Stand der Technik bekannten oder sich dem Fachmann in naheliegender Weise ergebenden magnetischen Schichten sind durch Verfahren zum thermisches Aufspritzen, Hinterspritzen oder Spritzgießen von Gemischen von Polymer-Magnetpulver gekennzeichnet. Im Gegensatz dazu wird in der vorliegenden Erfindung die hartmagnetische Schicht selbst mittels Abscheidung aus einer Gasphase, beispielsweise durch ein Hohlkathoden-Gasfluss Verfahren und/oder ein PVD-Verfahren auf ein Substrat aufgebracht. Die bisher im Stand der Technik eingesetzten Polräder weisen als magnetisch wirksame Komponente eine Composit-Schicht bestehend aus einer Polymermatrix mit eingearbeitetem magnetischem Pulver, meist aus ferritischem Material auf. Obwohl diese Schichten günstig herzustellen sind, weisen diese polymerbasierten Schichten nur eine Positionsgenauigkeit von +/- 1° auf und sind über einer Temperatur von > 120°C nicht einsetzbar. Die erreichbare Genauigkeit der Schichtdicke ist dabei produktionsbedingt nicht besser als +/- 40 µm. Weiters sind sie vulnerabel gegenüber Ölen und Fetten, die bei schnell drehenden Teilen und zu kühlenden Systemen oft eingesetzt werden, womit die notwendigen Lebensdauern nicht erreicht werden. Ein weiterer Nachteil ist, dass diese Composit-Lösungen nur für Umdrehungszahlen bis höchstens ca. 10000 - 15000 U/min (je nach Durchmesser) einsetzbar sind, da die Haftfestigkeiten für höhere Fliehkräfte nicht ausreichen.

Somit sind magnetischen Drehgebern sowohl bei Präzision und Geschwindigkeit als auch bezüglich der Einsatztemperatur und Lebensdauer Grenzen gesetzt. Bezogen auf die notwendige, stets steigende und in Zukunft notwendige Präzision die im Bereich Industrie 4.0, Autonomen Fahren und Steuerung von E-Motoren (Rotor) verlangt werden, sind daher dem aus dem Stand der Technik bekannten magnetischen Inkremental- und Absolut-Drehgebern Grenzen gesetzt.

Es war deshalb eine Aufgabe der vorliegenden Erfindung eine magnetische Signaleinrichtung zu entwickeln, die diese Nachteile behebt und den Stand der Technik weiterentwickelt.

Nach einer besonderen Ausführungsform der Erfindung weist die magnetische Signaleinrichtung ein Tragelement und/oder eine Tragstruktur und eine auf dem Tragelement und/oder der Tragstruktur aufgebrachte hartmagnetische Schicht ohne Polymeranteil auf, wobei die hartmagnetische Schicht über zumindest eines der Verfahren nach dem Hohlkathoden-Gasflusssputtern und/oder Hohlkathodensputtern und/oder Galvanisieren und/oder PVD und/oder CVD und/oder Plasmaspritzen aufgebracht wird wodurch die hartmagnetische Schicht zumindest 75 Gewichts% aus einer oder mehreren der folgenden Verbindungen wie NdFeB und/oder Co₅Sm und/oder Co₁₇Sm₂, insbesondere mit/ohne Dotierung oder Legierung mit weiteren Elementen wie beispielsweise Fe, Cu, Zr besteht und die hartmagnetische Schicht in ihrem Abtastbereich eine magnetische Remanenz von 0,1 T bis 1,3 T aufweist. Eine entscheidende Eigenschaft der vorliegenden Erfindung ist das Fehlen einer Polymerkomponente (sowohl Elastomere als auch Thermoplaste), sowie das Vorliegen einer rein metallischen Legierungsschicht. Nach einer besonderen Ausführungsform der Erfindung ist damit eine maximale Einsatztemperatur (auch langzeitig) von bis zu 250°C möglich. Das ist mit den im Stand der Technik gelehrten Produkten nicht möglich. In der DE 10 2016 218 930 A1 wird beispielsweise ein PVD-, Galvanisierungs oder Bedampfungsverfahren dazu verwendet, auf ein hergestellte magnetisches Bauteil aus Polymer-Compositmaterial eine Metallschicht ("6" in Fig. 5) aufzutragen. Die magnetisch wirksame Schicht wird dabei durch ein Spritzgußverfahren hergestellt und weist nicht wie bei dem vorgestellten erfinderischen Produkt eine metallische magnetische Komponente, die insbesondere durch PVD- bzw. Hohlkathodengassflusssputtern hergestellt wurde.

Nach einer besonderen Ausführungsform der Erfindung weist die hartmagnetische Schicht in ihrem Abtastbereich eine mittlere Dicke zwischen 10 µm und 100 µm, bevorzugt mehr als 15 µm besonders bevorzugt mehr als 25 µm bzw. zwischen 25 µm und 60 µm, aufweist.

Aus dem Stand der Technik sind verschiedene physikalische Gasphasenabscheidungsverfahren, insbesondere CVD- (Chemical Vapour Deposition) und PVD-Verfahren (Physical Vapour Deposition), bekannt. Im Bereich der PVD-Verfahren ist es beispielsweise möglich Ionen über eine Glimmentladung einer Hohlkathode zu erzeugen und die so erzeugten Ionen auf eine Oberfläche aufzutragen bzw. zu sputtern. Bei Hohlkathodensputtern wird das zu beschichtende Werkstück dabei direkt beschichtet. Falls die Hohlkathode dabei durch ein Gas, beispielsweise ein Edelgas, beispielsweise Argon, durchströmt wird, spricht man vom Hohlkathoden - Gasflusssputtern. Der Gasstrom transportiert dabei das Material zum Substrat. Bei Plasmaspritzen wird geeignetes Pulver in einem, insbesondere durch einen Lichtbogen erzeugten, Plasma aufgeschmolzen und auf ein Substrat geschleudert.

Nach einer beispielhaften Ausführungsform weist die hartmetallische Schicht, erzeugt beispielsweise mittels PVD, CVD und/oder Hohlkathodensputtern, eine Kristallinität von zumindest 50%, bevorzugt zumindest 75%, auf.

Nach einer besonderen Ausführungsform der Erfindung weist die hartmagnetische Schicht im Abtastbereich eine mittlere Dicke zwischen 15 und 80 µm, bevorzugt zwischen 25 und 60 µm auf. Die Schichtdicke kann dabei mit einer Präzision von kleiner gleich +/- 0,2µm, insbesondere kleiner gleich +/- 0,1 µm, eingestellt werden, wodurch die Präzision gegenüber dem Stand der Technik entscheidend verbessert wird.

Durch das besonders hohe Aspektverhältnis zwischen Schichtdicke und magnetischer Polbreite weist die vorliegende Erfindung herausragende Eigenschaften insbesondere bei In-Plane-gerichteter Magnetisierung auf.

Nach einer besonderen Ausführungsform der Erfindung ist die Tragstruktur aus einem keramischen Material vorgesehen.

Nach einer besonderen Ausführungsform der Erfindung ist die Tragstruktur aus einem metallischen Material vorgesehen.

Nach einer besonderen Ausführungsform der Erfindung ist über der hartmagnetischen Schicht im Abtastbereich eine weitere Schicht, vorzugsweise mit einer mittleren Dicke mit bis zu 10µm als Schutzschicht, zum Schutz der hartmagnetischen Schicht vorgesehen.

Nach einer besonderen Ausführungsform der Erfindung enthält die hartmagnetische Schicht im Abtastbereich weitere Legierungselemente aus der Reihe der Übergangsmetalle, bevorzugt Fe und/oder Zr und/oder Cu.

Nach einer besonderen Ausführungsform weist die hartmetallische Schicht dabei eine Zusammensetzung mit - bezogen auf die Zusammensetzung der hartmetallische Schicht - bis zu 10 Gewichts% an Legierungselementen auf.

Nach einer besonderen Ausführungsform der Erfindung ist die magnetische Signaleinrichtung als rotationsymmetrisches Polrad ausgeführt.

Nach einer besonderen Ausführungsform der Erfindung ist die magnetische Signaleinrichtung als rotationsymmetrischer Encoder ausgeführt.

Nach einer besonderen Ausführungsform der Erfindung ist bei Magnetisierung der hartmagnetischen Schicht eine Winkelgenauigkeit von kleiner gleich +-0,1° zwischen den unterschiedlich magnetisierbaren Bereichen erreichbar. Das bedeutet, dass die Struktur der Magnetisierung sehr fein realisiert werden kann.

Nach einer Ausführungsform ist die Erfindung durch eine magnetische Detektionseinrichtung mit einer magnetischen Signaleinrichtung nach einem der vorhergehenden Ansprüche und einer Sensoreinheit mit einem Sensor, der mit XMR- und/oder Hall-Messprinzip ausgestattet ist, gekennzeichnet.

Als XMR-Sensor bezeichnet man einen Sensor der magnetoresistiv arbeite, das heisst, dass der Sensor unter dem Einfluss des magnetischen Flusses seinen Widerstand ändert. Dabei sind aus dem Stand der Technik sogenannte AMR, GMR und TMR Sensoren bekannt, die unter XMR-Sensoren subsumiert werden.

Nach einer besonderen Ausführungsform der Erfindung weisen der Sensor und die magnetische Signaleinrichtung eine Auflösung von 10 bis 20 Bit, insbesondere auf einer oder mehreren Spuren, auf.

Die Erfindung ist nach einer Ausführungsform ferner durch eine Detektionseinrichtung nach Anspruch 11 gekennzeichnet.

Nach einer besonderen Ausführungsform weist die Magnetische Detektionseinrichtung neben der Signaleinrichtung eine Sensoreinheit mit einem Sensor auf, wobei der Sensor mit XMR- und/oder Hall-Messprinzip ausgestattet ist.

Nach einer besonderen Ausführungsform ist zwischen dem Sensor und der magnetischen Signaleinrichtung ein Abstand zwischen 0,1 mm und 3 mm vorgesehen.

Nach einer besonderen Ausführungsformweisen der Sensor und die magnetische Signaleinrichtung eine Auflösung von 10 bis 20 Bit, insbesondere auf einer oder mehreren Spuren, auf.

Die Erfindung ist nach einer weiteren Ausführungsform durch ein Verfahren zur Herstellung einer magnetischen Signaleinrichtung nach Anspruch 14 gekennzeichnet. Nach einer besonderen Ausführungsform wird die hartmagnetische Schicht direkt aus der Gasphase über eines der folgenden Verfahren auf das Tragelement der Signaleinrichtung aufgebracht: Hohlkathoden-Gasflusssputtern und/oder Hohlkathodensputtern und/oder Galvanisieren und/oder PVD-Verfahren und/oder CVD-Verfahren und/oder Plasmaspritzen.

Die Erfindung ist im Folgenden anhand mehrerer nicht- einschränkender, schematischer Figuren erläutert. Es zeigen:
Fig. 1 eine schematische perspektivische Ansicht einer magnetischen Signaleinrichtung
Fig. 2 eine schematische Ansicht einer erfinderischen magnetischen Detektionseinrichtung in einer Draufsicht
Fig. 3 eine Schnittdarstellung eines Teils einer magnetischen Signaleinrichtung

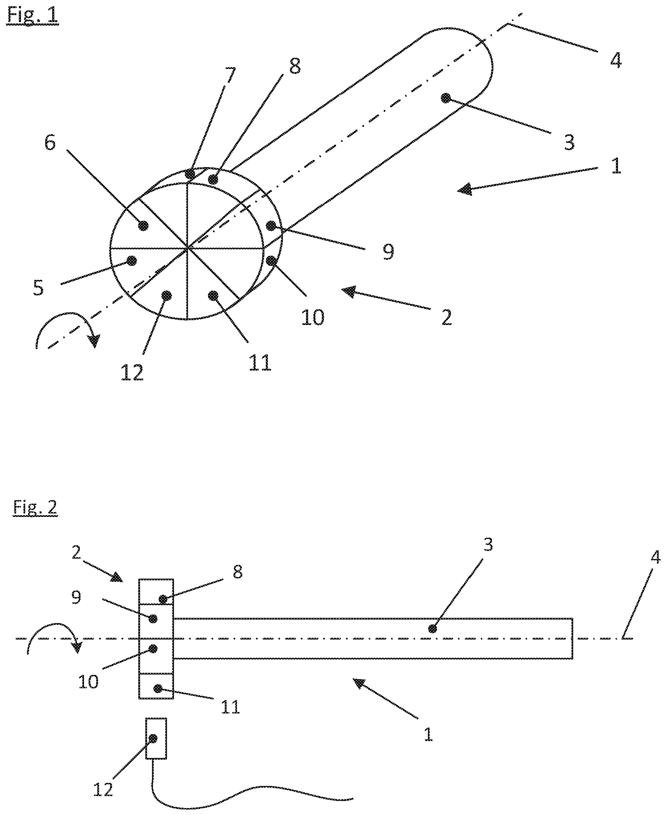

In Fig. 1 ist ein magnetische Signaleinrichtung 1 schematisch dargestellt. Dabei weist die magnetische Signaleinrichtung 1 ein rotationsymmetrisches Polrad 2 auf. Dieses Polrad 2 ist drehfest mit einer Welle 3 verbunden. Die Welle 3 dreht sich um eine Drehachse 4 und ist beispielsweise mit einem Getriebe oder einer Antriebsmaschine (nicht dargestellt) verbunden. Auf diese Weise kann mit dem Polrad 2 die Drehung und/oder Position der Welle 3 gemessen werden.

Wie in Fig. 1 weiter ersichtlich ist, weist das Polrad entsprechende Abschnitte 5, 6, 7, 8, 9, 10, 11, 12 auf, die eine hartmagnetische Schicht mit abwechselnder Magnetisierung, als magnetische Pole, aufweist. Die hartmagnetische Schicht wird dabei über eine geeignete Magnetisierungseinrichtung magnetisiert. Wie aus Fig. 1 und Fig. 2 ersichtlich ist die hartmagnetische Schicht dabei an der vorderen Fläche des Polrades als auch an der radialen Umfangsfläche angeordnet. In Fig. 2 sind die einzelnen Pole 8, 9, 10, 11 an einem Teil der radialen Umfangsfläche gezeigt. Zusätzlich ist ein Detektor 12 dargestellt, der in einem vorbestimmten Abstand von dem Polrad 2 angeordnet ist. Bei dem Detektor 12 handelt es sich beispielsweise um einen Detektor/Sensor, der auf dem XMR- und/oder Hall-Messprinzip basiert und in hoher Auflösung die Drehung und/oder Position des Polrades 2 misst.

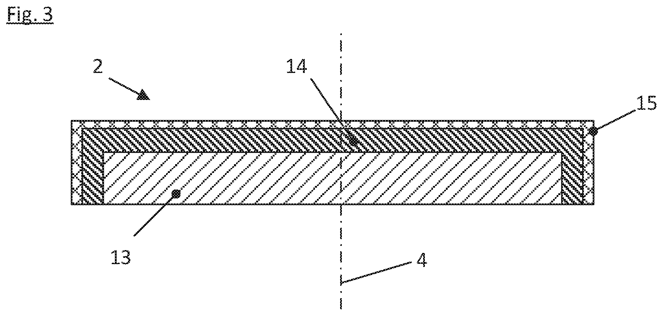

In Fig. 3 ist im Detail der Aufbau des Polrades 2 schematisch dargestellt. Das Polrad 2 weist dabei eine Tragstruktur 13, beispielsweise eine keramische und metallische Scheibe, auf. Auf dieser Tragstruktur 13 ist die erfindungsgemäße hartmetallische Schicht aufgetragen. Im dargestellten Fall ist die hartmetallische Schicht dabei auf die gesamte radiale Umfangsfläche und an einer der beiden Stirnflächen des Polrades aufgetragen. Nach einer besonderen Ausführung der Erfindung ist die hartmagnetische Schicht nur im Abtastbereich des Sensors 12 vorgesehen. Nach einer weiteren bevorzugten Ausführungsform der Erfindung ist über der hartmagnetischen Schicht eine Schutzschicht 15 vorgesehen, die die abgetastete hartmagnetische Schicht vor Beschädigung und/oder Umwelteinflüssen schützt.

Nach einer besonderen Ausführungsform der Erfindung können mit dem Einsatz von Polrädern, die anstatt einer polymerbasierten Composit-Schicht eine hartmagnetische Schicht, insbesondere eine Kobalt-Samarium-Schicht (CoSm), vorzugsweise ohne Applikation einer Polymermatrix, verwenden, die systemimmanenten Nachteile von Magnetdrehgebern kompensiert werden.

CoSm weist mit einer Curie-Temperatur von mehr als 700°C eine hervorragende Temperaturbeständigkeit auf. Weiters erlaubt die sehr homogene mikrokristalline Struktur der Schicht im Zusammenspiel mit einer gut kontrollierbaren Schichtdicke das sehr präzise Magnetisieren mit einer Winkelgenauigkeit von weniger als 0,1°. Werden derartige Polräder mit den geeigneten Sensoren kombiniert, können Auflösungen von bis zu 18 bit erreicht werden. Dadurch ist es nicht nur möglich, bisher nur durch optische Systeme abdeckbare Genauigkeiten bei gleichzeitig bekannter Robustheit zu erreichen. Die dabei erzielbare Genauigkeit erfüllt auch die Kriterien für den Einsatz in Elektromotoren zur Steuerung der Rotoren als Ersatz von Resolvern.

Für die hochpräzise Applikation auf den Substraten wird Hohlkathoden-Gasflusssputtern, PVD, PECVD, CVD oder Plasmaspritzen, bevorzugt das Hohlkathoden-Gasfluss- oder PVD-Verfahren, verwendet. Die Schichtdicken bewegen sich zwischen 1 und 150 µm. Als Substrate eignen sich metallische Materialen wie beispielsweise Stahl, Edelstahl, Kupfer, Messing oder Aluminium, bevorzugt werden allerdings nicht ferromagnetische Materialien.

Ein weiterer Vorteil gegenüber dem Stand der Technik ist die Unempfindlichkeit gegenüber organischen Lösemitteln, Ölen sowie Fetten, da insbesondere keine kohlenstoffbasierten Polymere eingesetzt werden. Speziell in ölnebel-behafteten Umgebungen, die unter anderem im Bereich der Hochleistungselektromotoren und Antriebsstränge von E-Automobilen vorkommen, stellt die vorliegende Innovation einen entscheidenden Mehrwert zur Effizienzsteigerung dar.

Weiters bietet sich die Möglichkeit, auf das Gehäuse zu verzichten und eine Kombination von Polrad, das direkt auf die Welle gesetzt wird und separater Auswerteeinheit zu verwenden (Bearingless Encoders). Dadurch ist es einerseits möglich, die Messeinheit direkt, z.B. in einem Elektromotor, zu integrieren, außerdem wird kein freies Ende der Welle für eine Montage benötigt.

Werden höhere Umdrehungsgeschwindigkeiten benötigt, so wird bei konventionellen Systemen entweder ein Stützring außen auf das Polrad notwendig oder es muss auf Zahnräder als Signalgeber (Back-Bias-Anordnung) zurückgegriffen werden. Dies geht allerdings zu Lasten der Genauigkeit, außerdem benötigt eine solche Konfiguration einen sehr geringen Abstand zwischen Sensor und Rad, der aufgrund realer Toleranzen oft nicht gewährleistet werden kann.

## Patentansprüche

1. Magnetische Signaleinrichtung (1) zur Messung der Position eines rotierenden Bauteiles einer Antriebsmaschine, wobei die Signaleinrichtung mit dem Bauteil der Antriebsmaschine rotationsfest gekoppelt ist und die Signaleinrichtung ein Tragelement (13) und eine auf dem Tragelement (13) aus einer Gasphase direkt auf dem Tragelement (13) abgeschiedene, magnetisierbare, hartmagnetische Schicht (14) aufweist, wobei die hartmagnetische Schicht zumindest zu 75 Gewichts%, vorzugsweise zumindest zu 85 Gewichts%, besonders bevorzugt zumindest zu 90 Gewicht%, bezogen auf die Zusammensetzung der hartmagnetischen Schicht, aus einer oder mehreren der folgenden Verbindungen besteht
• NdFeB und/oder
• Co₅Sm und/oder
• Co₁₇Sm₂
Und die hartmagnetische Schicht in ihrem Abtastbereich eine magnetische Remanenz von 0,3 T bis 1,3 T aufweist und die hartmagnetische Schicht (14) nach einer Magnetisierung in Rotationsrichtung eine magnetische Struktur aufweist, sodass, in Abhängigkeit des Drehwinkels des Bauteils, an der hartmagnetischen Schicht (14) über einen Sensor (12) die magnetische Struktur, beispielsweise die magnetische Feldstärke in unterschiedlicher Höhe und/oder Orientierung, messbar ist um einen Rückschluss auf die Rotation und/oder Position des Bauteils zu ermöglichen.

2. Magnetische Signaleinrichtung nach Anspruch 1, **dadurch gekennzeichnet, dass** die hartmagnetische Schicht (14) in ihrem Abtastbereich eine mittlere Dicke zwischen 10 und 100 µm, bevorzugt mehr als 15 µm, besonders bevorzugt zwischen 25 und 60 µm aufweist.

3. Magnetische Signaleinrichtung nach Anspruch 1 oder 2, **dadurch gekennzeichnet, dass** das Tragelement (13) aus einem nicht-magnetischen, insbesondere keramischen, Material vorgesehen ist.

4. Magnetische Signaleinrichtung nach Anspruch 1 oder 2, **dadurch gekennzeichnet, dass** das Tragselement (13) aus einem metallischen Material vorgesehen ist.

5. Magnetische Signaleinrichtung nach einem der vorhergehenden Ansprüche, **dadurch gekennzeichnet, dass** über dem Abtastbereich der hartmagnetischen Schicht (14) eine weitere Schicht (15), vorzugsweise mit einer mittleren Dicke mit bis zu 10µm, als Schutzschicht zum Schutz der hartmagnetischen Schicht vorgesehen ist.

6. Magnetische Signaleinrichtung nach einem der vorhergehenden Ansprüche, **dadurch gekennzeichnet, dass** die hartmagnetische Schicht (14) in ihrem Abtastbereich weitere Legierungselemente aus der Reihe der Übergangsmetalle enthalten, bevorzugt Fe und/oder Zr und/oder Cu.

7. Magnetische Signaleinrichtung nach einem der vorhergehenden Ansprüche, **dadurch gekennzeichnet, dass** die magnetische Signaleinrichtung als rotationsymmetrisches Polrad ausgeführt ist.

8. Magnetische Signaleinrichtung nach einem der vorhergehenden Ansprüche, **dadurch gekennzeichnet, dass** die bei Magnetisierung der hartmagnetischen Schicht (14) eine Winkelgenauigkeit von kleiner gleich 0,1° zwischen den unterschiedlich magnetisierten Bereichen erreichbar ist.

9. Magnetische Signaleinrichtung nach einem der vorhergehenden Ansprüche, **dadurch gekennzeichnet, dass** die hartmagnetische Schicht (14) über zumindest eines der folgenden Verfahren auf das Tragelement aufgebracht wurde:
• Hohlkathoden-Gasflusssputtern
• Hohlkathodensputtern
• Galvanisieren
• PVD-Verfahren
• CVD-Verfahren
• Plasmaspritzen

10. Magnetische Detektionseinrichtung mit einer magnetischen Signaleinrichtung nach einem der vorhergehenden Ansprüche und einer Sensoreinheit mit einem Sensor (12), der mit XMR- und/oder Hall-Messprinzip ausgestattet ist.

11. Magnetische Detektionseinrichtung nach Anspruch 10, **dadurch gekennzeichnet, dass** zwischen dem Sensor (12) und der magnetischen Signaleinrichtung ein Abstand von 0,1 mm bis 3 mm vorgesehen ist.

12. Magnetische Detektionseinrichtung nach Anspruch 10 oder 11, **dadurch gekennzeichnet, dass** der Sensor und die magnetische Signaleinrichtung eine Auflösung von 10 bis 20 Bit, insbesondere auf einer oder mehreren Spuren, aufweisen.

13. Verfahren zur Herstellung einer magnetischen Signaleinrichtung nach einem der vorhergehenden Ansprüche, **dadurch gekennzeichnet, dass** die hartmagnetische Schicht direkt aus der Gasphase über eines der folgenden Verfahren auf das Tragelement aufgebracht wird:
• Hohlkathoden-Gasflusssputtern
• Hohlkathodensputtern
• Galvanisieren
• PVD-Verfahren
• CVD-Verfahren
• Plasmaspritzen

## Claims

1. A magnetic signal device (1) for measuring the position of a rotating component of a drive machine, wherein the signal device is coupled in a rotationally fixed manner to the component of the drive machine and the signal device has a supporting element (13) and a magnetizable, hard-magnetic layer (14) deposited on the supporting element (13) from a gas phase directly on the supporting element (13), wherein at least 75% by weight, preferably at least 85% by weight, particularly preferred at least 90% by weight, based on the composition of the hard-magnetic layer, of the hard-magnetic layer consist of one or more of the following compounds
• NdFeB and/or
• Co₅Sm and/or
• Co₁₇Sm₂
and the hard-magnetic layer has a magnetic remanence of 0.3 T to 1.3 T in its scanning region and after magnetization the hard-magnetic layer (14) has a magnetic structure in the direction of rotation, so that, depending on the angle of rotation of the component, the magnetic structure, for example the magnetic field strength at different heights and/or orientations, can be measured on the hard-magnetic layer (14) via a sensor (12) in order to enable conclusions to be drawn about the rotation and/or position of the component.

2. The magnetic signal device according to claim 1, **characterized in that** the hard-magnetic layer (14) has an average thickness of between 10 and 100 µm, preferably more than 15 µm, particularly preferred between 25 and 60 µm, in its scanning region.

3. The magnetic signal device according to claim 1 or 2, **characterized in that** the supporting element (13) is provided of a non-magnetic, in particular ceramic, material.

4. The magnetic signal device according to claim 1 or 2, **characterized in that** the supporting element (13) is provided of a metallic material.

5. The magnetic signal device according to one of the preceding claims, **characterized in that** a further layer (15), preferably with an average thickness of up to 10 µm, is provided over the scanning region of the hard-magnetic layer (14) as a protective layer for protecting the hard-magnetic layer.

6. The magnetic signal device according to one of the preceding claims, **characterized in that** the hard-magnetic layer (14) contains further alloying elements from the series of transition metals in its scanning region, preferably Fe and/or Zr and/or Cu.

7. The magnetic signal device according to one of the preceding claims, **characterized in that** the magnetic signal device is configured as a rotationally symmetrical pole wheel.

8. The magnetic signal device according to one of the preceding claims, **characterized in that** an angular accuracy of less than or equal to 0.1° between the differently magnetized regions is achievable when the hard-magnetic layer (14) is magnetized.

9. The magnetic signal device according to one of the preceding claims, **characterized in that** the hard-magnetic layer (14) has been applied to the supporting element by at least one of the following methods:
• hollow cathode gas flow sputtering
• hollow cathode sputtering
• electroplating
• PVD method
• CVD method
• plasma spraying

10. A magnetic detection device with a magnetic signal device according to one of the preceding claims and a sensor unit with a sensor (12) working with an XMR and/or Hall measuring method.

11. The magnetic detection device according to claim 10, **characterized in that** a distance of 0.1 mm to 3 mm is provided between the sensor (12) and the magnetic signal device.

12. The magnetic detection device according to claim 10 or 11, **characterized in that** the sensor and the magnetic signal device have a resolution of 10 to 20 bits, in particular on one or more tracks.

13. A method for producing a magnetic signal device according to one of the preceding claims, **characterized in that** the hard-magnetic layer is applied directly from the gas phase to the supporting element by one of the following methods:
• hollow cathode gas flow sputtering
• hollow cathode sputtering
• electroplating
• PVD method
• CVD method
• plasma spraying

## Revendications

1. Dispositif de signalisation magnétique (1) pour mesurer la position d'un composant rotatif d'un moteur, le dispositif de signalisation étant couplé de manière solidaire en rotation au composant du moteur et le dispositif de signalisation présentant un élément de support (13) et une couche magnétique dure (14) magnétisable, déposée à partir d'une phase gazeuse directement sur l'élément de support (13), la couche magnétique dure étant composée d'au moins 75 % en poids, de préférence d'au moins 85 % en poids, et de manière particulièrement préférée d'au moins 90 % en poids, par rapport à la composition de la couche magnétique dure, d'un ou plusieurs des composés suivants :
• NdFeB et/ou
• Co₅Sm et/ou
• Co₁₇Sm₂
et la couche magnétique dure présentant dans sa zone de détection une rémanence magnétique de 0,3 T à 1,3 T et la couche magnétique dure (14) présentant après une magnétisation dans le sens de rotation une structure magnétique telle que, en fonction de l'angle de rotation du composant, la structure magnétique, par exemple l'intensité du champ magnétique à différentes hauteurs et/ou orientations, peut être mesurée sur la couche magnétique dure (14) à l'aide d'un capteur (12) afin de permettre la réduction de la rotation et/ou de la position du composant.

2. Dispositif de signalisation magnétique selon la revendication 1 **caractérisé en ce que** la couche magnétique dure (14) présente, dans sa zone de détection, une épaisseur moyenne comprise entre 10 et 100 µm, de préférence supérieure à 15 µm et de manière particulièrement préférée comprise entre 25 et 60 µm.

3. Dispositif de signalisation magnétique selon la revendication 1 ou 2 **caractérisé en ce que** l'élément de support (13) est réalisé dans un matériau non magnétique, en particulier céramique.

4. Dispositif de signalisation magnétique selon la revendication 1 ou 2 **caractérisé en ce que** l'élément de support (13) est réalisé dans un matériau métallique.

5. Dispositif de signalisation magnétique selon l'une des revendications précédentes **caractérisé en ce qu'**une autre couche (15), de préférence d'une épaisseur moyenne pouvant atteindre 10 µm, est prévue au-dessus de la zone de détection de la couche magnétique dure (14) en tant que couche de protection pour protéger la couche magnétique dure.

6. Dispositif de signalisation magnétique selon l'une des revendications précédentes **caractérisé en ce que** la couche magnétique dure (14) contient dans sa zone de détection d'autres éléments d'alliage de la série des métaux de transition, de préférence du Fe et/ou du Zr et/ou du Cu.

7. Dispositif de signalisation magnétique selon l'une des revendications précédentes **caractérisé en ce que** le dispositif de signalisation magnétique est conçu comme une roue polaire à symétrie de révolution.

8. Dispositif de signalisation magnétique selon l'une des revendications précédentes **caractérisé en ce que**, lors de la magnétisation de la couche magnétique dure (14), une précision angulaire inférieure ou égale à 0,1° peut être obtenue entre les zones magnétisées différemment.

9. Dispositif de signalisation magnétique selon l'une des revendications précédentes **caractérisé en ce que** la couche magnétique dure (14) a été appliquée sur l'élément de support au moyen d'au moins l'un des procédés suivants :
• pulvérisation cathodique à flux gazeux
• pulvérisation cathodique
• galvanisation
• procédé PVD
• procédé CVD
• projection plasma

10. Dispositif de détection magnétique comprenant un dispositif de signalisation magnétique selon l'une des revendications précédentes et une unité de détection avec un capteur (12) équipé du principe de mesure XMR et/ou Hall.

11. Dispositif de détection magnétique selon la revendication 10, **caractérisé en ce qu'**une distance de 0,1 mm à 3 mm est prévue entre le capteur (12) et le dispositif de signalisation magnétique.

12. Dispositif de détection magnétique selon la revendication 10 ou 11, **caractérisé en ce que** le capteur et le dispositif de signalisation magnétique présentent une résolution de 10 à 20 bits, en particulier sur une ou plusieurs pistes.

13. Procédé de fabrication d'un dispositif de signalisation magnétique selon l'une des revendications précédentes, **caractérisé en ce que** la couche magnétique dure est appliquée directement à partir de la phase gazeuse sur l'élément de support à l'aide de l'un des procédés suivants :
• pulvérisation cathodique à flux gazeux
• pulvérisation cathodique
• galvanisation
• procédé PVD
• procédé CVD
• projection plasma
